# EUROPÄISCHE PATENTANMELDUNG

(11) **EP 4 431 771 A1**
(43) Veröffentlichungstag der Anmeldung: **18.09.2024**
(21) Anmeldenummer: 24163112.6
(22) Anmeldetag: 13.03.2024
(51) Int. Cl.: F16K 31/00, F16K 37/00, B60G 17/00, F16F 9/02, F16K 31/08

(54) **SMARTES MAGNETVENTIL MIT INTEGRIERTER ELEKTRONIK**

(30) Priorität: 14.03.2023 DE 102023106342
(71) Anmelder: RAPA Automotive GmbH & Co. KG, 95100 Selb (DE)
(72) Erfinder: Kemnitz, Rocco, 95100 Selb (DE); Pausch, Roman, 95100 Selb (DE)
(74) Vertreter: Klunker IP Patentanwälte PartG mbB

(57) **Zusammenfassung**

Die Erfindung betrifft eine Magnetventileinheit (1) umfassend ein Magnetventil (10) und eine Elektronik (24) zum Antrieb des Magnetventils. Die Erfindung betrifft eine Luftfeder und ein Luftfedersystem.

## Beschreibung

### GEBIET DER ERFINDUNG

Die vorliegende Erfindung betrifft eine Magnetventileinheit, insbesondere ein Pneumatikventil, eine Luftfeder und ein Luftfedersystem eines Kraftfahrzeugs.

### HINTERGRUND DER ERFINDUNG

Es ist bekannt, Magnetventile für Fluide, das heißt pneumatische und/oder hydraulische Magnetventile, beispielsweise in Mehrkammer-Luftfedern bzw. Stoßdämpfern zu verwenden, um ein Zusatz-Luftvolumen einem Basis-Luftvolumen zuzuschalten oder davon abzutrennen und damit die Federungseigenschaften der Luftfeder zu verändern. Dabei wird von einem den Magnetventilen der verschiedenen Luftfedern eines Fahrzeugs zugeordneten, üblicherweise zentralen Antriebs- und Ansteuergerät, wie einem Achssteuer- oder Fahrwerksteuergerät, pro Magnetventil eine elektrische Zuleitung für die Bestromung der jeweiligen Magnetspule vorgesehen. Es sind jedoch auch Mehrkammer-Luftfedern mit drei oder mehr Luftkammern bekannt, in denen entsprechend zwei oder mehr Magnetventile vorgesehen sind, so dass entsprechend viele elektrische Zuleitungen vorgesehen werden müssen.

### ZUSAMMENFASSUNG DER ERFINDUNG

Eine Aufgabe der Erfindung ist es, dabei die Ansteuerung der Magnetventile zu vereinfachen und den Verkabelungsaufwand zu reduzieren, insbesondere bei Verwendung in Luftfedern bzw. Mehrkammer-Luftfedern in Fahrzeugen.

Die Aufgabe wird gelöst durch die Gegenstände der unabhängigen Ansprüche. Bevorzugte Ausgestaltungen und Weiterbildungen sind in den davon abhängigen Ansprüchen angegeben.

Die erfindungsgemäße Magnetventileinheit umfasst ein Magnetventil und eine (integrierte) Elektronik, die bevorzugt zum Antrieb des Magnetventils eingerichtet ist und/oder genau einen, zwei oder mehrere Sensor(en), besonders bevorzugt genau einen, zwei oder mehrere Drucksensor(en) umfasst oder daraus besteht.

Die erfindungsgemäße Magnetventileinheit ist eine vormontierte, eigenständige und/oder kompakte Baugruppe bzw. Baueinheit, die das Magnetventil und die Elektronik umfasst oder daraus besteht, so dass die Elektronik in die Magnetventileinheit (baulich) integriert ist, das heißt eine integrierte bzw. baulich integrierte Elektronik bildet. Die Magnetventileinheit besteht somit im einfachsten Fall aus einem Magnetventil mit einer (baulich integrierten) Elektronik, wobei die Elektronik zum Antrieb des Magnetventils bzw. dessen elektrischen Bauelemente eingerichtet ist (Antriebs-Elektronik) und/oder einen oder mehrere Sensor(en), insbesondere einen oder zwei Drucksensor(en) umfasst oder daraus besteht.

Die erfindungsgemäße Magnetventileinheit weist bevorzugt ein Gehäuse (Magnetventileinheits-Gehäuse) auf, das das Magnetventil und die Elektronik umschließt und ein gemeinsames Gehäuse bildet. Dieses Magnetventileinheits-Gehäuse besteht in der Regel aus zwei oder mehreren Teilen bzw. Teilgehäusen und bildet bei bestimmungsgemäßem Gebrauch ein zusammengesetztes und/oder gemeinsames Bauelement bzw. Gehäuse. Dabei können zwei, mehrere oder sämtliche Teilgehäuse untrennbar miteinander verbunden sein (einteiliges Gehäuse). Das Magnetventileinheits-Gehäuse ist bevorzugt geschlossen und/oder wasser-, spritzwasser- und/oder luftdicht und/oder das Magnetventileinheits-Gehäuse weist bevorzugt (nur bzw. genau) die im Folgenden beschriebenen Fluid- und Elektro-Anschlüsse bzw. -Schnittstellen auf.

Vorzugsweise weist die Magnetventileinheit bzw. das Magnetventileinheits-Gehäuse (genau) zwei Fluidanschlüsse auf, bevorzugt einen radialen Anschluss und einen axialen Anschluss, die je nach Strömungsrichtung des Fluids einen Fluideinlass und/oder einen Fluidauslass bilden. Das Magnetventil ist bevorzugt als Pneumatik-Magnetventil oder auch als Hydraulik-Magnetventil eingerichtet. Die Magnetventileinheit bzw. das Magnetventileinheits-Gehäuse weist weithin bevorzugt (genau) zwei (außenliegende bzw. im Gehäuse angeordnete) elektrische Anschlüsse (zum Beispiel Buchse, Stecker, Steckbuchsen, Kabel) auf. Die elektrischen Anschlüsse sind vorzugsweise ein Versorgungsspannungs-Anschluss für eine Versorgungsspannung (in der Regel eine dauerhaft anliegende Gleichspannung von 12V, 24V oder 48V) und ein Steuer- bzw. Bus-Anschluss für eine Steuerleitung, beispielsweise einen Bus bzw. Standard-Bus, wie CAN-Bus (Controller Area Network), LIN-Bus (Local Interconnect Network), CAN-FD-Bus oder Flexray-Bus. Die Magnetventileinheit bzw. das Magnetventileinheits-Gehäuse weist besonders bevorzugt darüberhinaus keine weiteren Fluid- oder Elektro-Anschlüsse oder - Schnittstellen auf.

Die Versorgungsspannung wird beispielsweise von einem Fahrzeugbordnetz (allgemeine Spannungsversorgung) eines Fahrzeugs geliefert und der Versorgungsspannungs-Anschluss ist bevorzugt zweipolig. Der Steuer-Anschluss ist ein Steuer- bzw. Kommunikations-Anschluss, über den bevorzugt ausschließlich (leistungslose) Steuersignale (beispielsweise von einem übergeordneten Steuergerät oder einem Kommunikationspartner auf dem Bus) übertragen werden, und der Steuer-Anschluss ist bevorzugt nur für leistungslose Steuersignale bzw. Steuerspannungen ausgelegt. Der Steuer-Anschluss ist bevorzugt eine Schnittstelle für einen Standard-Bus in Fahrzeugen, wie CAN- oder LIN-Bus, und ist beispielsweise ein- oder zweipolig und/oder zwei-, drei- oder vier-adrig. Das Magnetventileinheits-Gehäuse kann darüberhinaus auch vorbestimmte mechanische Schnittstellen (Nasen, Nuten, Vertiefungen, etc.) und/oder Dichtmittel aufweisen, zur mechanischen Befestigung und/oder zur Abdichtung etwa in einer vorbestimmten Einbausituation.

Die Elektronik der Magnetventileinheit ist in einer erfindungsgemäßen Variante zum (elektrischen) Antrieb des Magnetventils, insbesondere zum Antrieb sämtlicher elektrischer und/oder elektromagnetischer Komponenten des Magnetventil, eingerichtet. Die Elektronik liefert entsprechend bevorzugt die gesamte Bestromung, das heißt sämtliche Antriebs- und Steuerspannungen und -ströme, für das Magnetventil. Entsprechend führen bevorzugt sämtliche elektrische Zuleitungen des Magnetventils (ausschließlich) zu der Elektronik.

Die Elektronik ist vorzugsweise als eine Elektronikeinheit, das heißt als eine Baueinheit ausgebildet, in der die verschiedenen, bevorzugt sämtliche Komponenten bzw. Bauelemente bzw. Elektronikbauelemente der (baulich integrierten) Elektronik bevorzugt kompakt bzw. platzsparend und/oder auf (genau) einer Leiterplatine oder auf zwei oder mehreren Leiterplatinen angeordnet sind. Die Elektronikbauelemente sind bevorzugt integrierte Elektronikbauelemente bzw. IC-Elemente (integrated circuit, IC). Im einfachsten Fall umfasst die Elektronik ausschließlich integrierte Elektronikbauelemente und/oder genau ein integriertes Elektronikbauelement oder besteht daraus.

Das Magnetventil weist zumindest eine Magnetspule auf, bevorzugt genau eine Magnetspule, besonders bevorzugt als einzige elektrische bzw. elektromagnetische Komponente. Die Elektronik bzw. die Elektronikeinheit ist dann dazu eingerichtet, den Spulenstrom bzw. sämtliche Schalt- und/oder Halteströme für die Magnetspule zum Anfahren und ggf. Halten von Schaltstellungen bzw. Endlagen zu liefern, abzugeben und/oder zu erzeugen und somit das Magnetventil (elektrisch) anzutreiben.

Entsprechend ist dann bevorzugt die Elektronik bzw. die Elektronikeinheit direkt und unmittelbar mit der Magnetspule des Magnetventils elektrisch verbunden und es befinden sich entsprechend keine elektrischen Bauelemente oder Schalteinheiten zwischen Elektronik bzw. Elektronikeinheit und Magnetspule. Beispielsweise verlaufen insgesamt (nur) genau zwei einadrige elektrische Zuleitungen zwischen Elektronik und Magnetventil, die jeweils direkt zu einem der beiden Anschlüsse der Magnetspule führen.

Weiterhin weist die Elektronik bzw. Elektronikeinheit bevorzugt sämtliche (außenliegenden bzw. externen) elektrischen Anschlüsse der Magnetventileinheit bzw. des Magnetventileinheits-Gehäuses auf (zum Beispiel Buchse, Stecker, Steckbuchsen, Kabel). Entsprechend weist die Elektronik bzw. Elektronikeinheit bevorzugt (genau) einen elektrischen Anschluss für die Versorgungsspannung und (genau) einen elektrischen Anschluss für die Steuerleitung bzw. den Bus auf. Ausgehend von Steuersignalen der Steuerleitung, beispielsweise Informationen über den Bus, steuert somit die Elektronik das Magnetventil und erzeugt mit Hilfe der Versorgungsspannung im einfachsten Fall sämtliche Antriebsströme für das Magnetventil.

Die Elektronik weist entsprechend bevorzugt eine Steuerlogik, umfassend insbesondere einen Mikroprozessor oder einen ASIC (Application-Specific Integrated Circuit), auf, die eingerichtet ist beispielsweise als Bus-Teilnehmer bzw. allgemein als Empfänger und/oder Sender für Steuersignale über die Steuerleitung zu arbeiten. Die Steuerlogik ist weiterhin eingerichtet beispielsweise die Dauer und die Höhe der Bestromung der Magnetspule vorzugeben und/oder eine Entscheidung über das Auslösen von Schaltprozessen bzw. das Abgeben von Schaltströmen, beispielsweise auf Basis von allgemeinen Vorgaben eines über die Steuerleitung verbundenen übergeordneten Steuergeräts, zu treffen. Die Elektronik bzw. die Elektronikeinheit ist entsprechend eine smarte Einheit.

Weiterhin weist die Elektronik bevorzugt eine Leistungselektronik auf, die eingerichtet ist, ausgehend von der Versorgungsspannung, sämtliche Antriebsströme und -spannungen, insbesondere den Spulenstrom bzw. sämtliche Spulenströme der Magnetspule des Magnetventils zu erzeugen, wie Schaltstrom und/oder Haltestrom. Im einfachsten Fall ist die Elektronik eingerichtet die Bestromung der Magnetspule des Magnetventils, das heißt den Spulenstrom, insbesondere Schaltstrom und ggf. auch den Haltestrom, durch (simples) Durchschalten der Versorgungsspannung zu erzeugen, so dass im einfachsten Fall die Elektronik eingerichtet ist, die Versorgungsspannung, während einer vorbestimmten Dauer, direkt bzw. unmittelbar auf die Zuleitungen der Magnetspule des Magnetventils zu schalten bzw. an der Magnetspule anzulegen. Dabei weist die Magnetspule beispielsweise einen ohmschen Widerstand zwischen 4 und 8 Ohm, insbesondere von 6 Ohm auf, so dass sich beispielsweise bei einer angelegten Versorgungsspannung von 12V ein Strom von 2A ergibt.

Ist die Elektronik als Elektronikeinheit, das heißt als Baueinheit, ausgebildet, so ist die Elektronikeinheit an dem Magnetventil (das selbst eine (weitere) Baueinheit der Magnetventileinheit bildet) bevorzugt direkt und unmittelbar angeordnet und fest mit diesem verbunden (zum Beispiel über Schraub-, Schweiß-, Klips-, Krimp- und/oder Klebeverbindungen). Bevorzugt umfasst die Elektronikeinheit weiterhin ein (geschlossenes oder offenes, ein- oder mehrstückiges) Gehäuse, auf dessen Außenseite die beiden elektrischen Anschlüsse angeordnet sind und/oder das die übrigen Komponenten der Elektronik (vollständig) umschließt und/oder ein Teilgehäuse des Magnetventileinheits-Gehäuses bildet. Bevorzugt bildet das Gehäuse der Elektronikeinheit zusammen mit dem Magnetventil bzw. einem Gehäuse (oder Teilgehäuse) des Magnetventils, das Magnetventileinheits-Gehäuse als gemeinsames, zusammengesetztes Gehäuse.

In der erfindungsgemäßen Magnetventileinheit ist die Elektronikeinheit mit Vorteil in unmittelbarer räumlicher Nähe zu dem Magnetventil bzw. dessen Magnetspule angeordnet, so dass die elektrischen Zuleitungen zwischen Elektronikeinheit und Magnetspule mit Vorteil kurz sind. Die elektrischen Zuleitungen zwischen Elektronikeinheit und Magnetspule verlaufen dabei bevorzugt vollständig innerhalb des Magnetventileinheits-Gehäuses.

Das Magnetventil umfasst oder besteht in an sich bekannter Art und Weise aus einem Ventilabschnitt und einem Aktuatorabschnitt bzw. Magnetaktuatorabschnitt, wobei der Aktuatorabschnitt das Ventil bzw. Fluidventil des Ventilabschnitts über ein, beispielsweise linear, entlang einer Längsachse des Magnetventils bewegliches Stellglied mechanisch betätigt bzw. antreibt. Das Magnetventil ist weiterhin bevorzugt dazu vorgesehen, in (genau) zwei verschiedenen Schaltstellungen betrieben zu werden, die besonders bevorzugt mit Endlagen des Aktuators bzw. des Stellglieds übereinstimmen. Das Magnetventil ist entsprechend bevorzugt ein 2/2 Schaltventil. Das Ventil ist weiterhin bevorzugt ein Sitzventil, in welchem ein (durch das Stellglied) verfahrbares Dichtelement mit einem feststehenden Dichtsitz zusammenwirkt. Die beiden Schaltstellungen werden dann einerseits von der Schließstellung des Ventils (in der das Dichtelement am Dichtsitz abdichtend eingreift und das Ventil geschlossen ist) und andererseits von der Offenstellung des Ventils (in der Dichtelement und Dichtsitz voneinander beabstandet sind und das Ventil geöffnet ist) gebildet. Bevorzugt besteht das Dichtelement oder der Dichtsitz aus einem Elastomer und/oder ist als einstückiges Elastomerbauteil ausgebildet.

Der Aktuator bzw. der Aktuatorabschnitt des Magnetventils umfasst die Magnetspule und einen Magnet- bzw. Eisenkreis, der einen feststehenden Magnetkern aufweist, sowie einen (axial) beweglichen Magnetanker. Der Magnetanker ist dabei Teil des Stellglieds und ist zur mechanischen Betätigung des Ventils mit dem Dichtelement unmittelbar (oder über einen (unmagnetischen) Stößel) gekoppelt und/oder fest verbunden. Im einfachsten Fall bildet der Magnetanker das (gesamte) Stellglied, eine Vorderseite des Magnetankers bildet das Dichtelement und der Dichtsitz wird durch ein (einstückiges) Elastomerbauteil gebildet.

In einer bevorzugten Ausgestaltung ist die Elektronikeinheit
- auf einer Längsachse der Magnetspule (das heißt die Längsachse der Magnetspule verläuft durch die Elektronikeinheit), und/oder
- an einer axialen Stirnseite des Magnetventils insbesondere des Aktuatorabschnitts bzw. der Magnetspule des Magnetventils, und/oder
- an einer radialen Außenseite des Magnetventils oder der Magnetspule des Magnetventils, und/oder
- an einer von den Fluidanschlüssen des Magnetventils abgewandten Seite, insbesondere axialen Stirnseite, des Magnetventils
angeordnet.

Im einfachsten Fall ist das Magnetventil ein monostabiles Ventil, das heißt ein NO-Ventil (normally open, stromlos offen) oder ein NC-Ventil (normally closed, stromlos geschlossen). Der in der Regel vollständig oder teilweise im Inneren der Magnetspule angeordnete, Magnetanker wird bei Bestromung der Magnetspule in Richtung des feststehenden Magnetkerns gedrängt, das heißt in Richtung eines kleinen bzw. kleineren axialen Luftspalts bzw. Arbeitsluftspalts zwischen Magnetanker und Magnetkern. Das Magnetventil umfasst weiterhin ein mechanisches Rückstell- bzw. Federelement, beispielsweise eine Schraubenfeder, die den Magnetanker in die entgegengesetzte Richtung und somit vom Magnetkern weg drängt, das heißt in Richtung eines großen bzw. größeren Luftspalts zwischen Magnetanker und Magnetkern. Das Stellglied bzw. der Magnetanker kann zwischen einer unbestromten Schaltstellung und/oder Endlage (auch als Ausgangsposition bezeichnet) mit großem bzw. maximalem Luftspalt und einer bestromten Schaltstellung und/oder Endlage (auch als Arbeitsposition bezeichnet) mit kleinem bzw. minimalem Luftspalt verfahren werden. Der axiale Luftspalt (beim Einnehmen der bestromten Endlage) ist in der Regel größer null und liegt bevorzugt im Bereich zwischen 0,1 mm und 1,5 mm und/oder beträgt beispielsweise 0,1, 0,2, 0,3, 0,5, 0,7, 0,8, 0,9, 1,0, 1,1, 1,2, 1,3 oder 1,5 mm, wobei jeder der genannten Werte auch eine Ober- oder Untergrenze des genannten Wertebereichs darstellen kann.

In einem NO-Ventil wird die unbestromte Endlage des Magnetankers durch einen mechanischen Anschlag und die bestromte Endlage durch das bestimmungsgemäße Eingreifen des Dichtelements am Dichtsitz, das heißt durch die Schließstellung des Ventils, festgelegt bzw. definiert, und die beiden Endlagen bilden die vorgesehenen Schaltstellungen des Magnetventils. In einem NC-Ventil wird die bestromte Endlage des Magnetankers durch einen mechanischen Anschlag und die unbestromte Endlage durch das bestimmungsgemäße Eingreifen des Dichtelements am Dichtsitz, das heißt durch die Schließstellung des Ventils, festgelegt bzw. definiert, und die beiden Endlagen bilden die vorgesehenen Schaltstellungen des Magnetventils.

In einem derartigen monostabilen Ventil hält (ohne Bestromung der Magnetspule) das mechanische Rückstell- bzw. Federelement den Magnetanker in der unbestromten Endlage (Ausgangsposition). Bei ausreichender Bestromung mit einem (kurzzeitigen) Schaltstrom (beispielsweise 2A während 300ms) der Magnetspule überwindet die zwischen Magnetanker und Magnetkern entstehende Magnetkraft die Federkraft des mechanischen Federelements und der Magnetanker verfährt in die bestromte Endlage (Arbeitsposition), in welcher er vorzugsweise mit einem geringeren (dauerhaften bzw. kontinuierlichen) Haltestrom (beispielsweise 0,5 bis 1A) gehalten wird. Nach dem Abschalten des Haltestroms fährt das Ventil durch das mechanische Rückstell- bzw. Federelement wieder in die unbestromte Endlage.

Die Elektronik der Magnetventileinheit ist bei dieser Ventilvariante bevorzugt dazu eingerichtet, eine sogenannte Push-Hold-Bestromung zu liefern, das heißt den Schaltstrom zum Anfahren der Arbeitsposition des Magnetventils zu erzeugen und/oder an das Magnetventil bzw. die Magnetspule des Magnetventils abzugeben. Der Schaltstrom liegt typischerweise im Bereich von 1,5A bis 10A und wird typischerweise über einen Zeitraum zwischen 100ms und 1000ms abgegeben (Push-Phase). Die Elektronik ist bevorzugt zusätzlich dazu eingerichtet einen Haltestrom bzw. Dauerstrom zum Halten der Arbeitsposition zu erzeugen bzw. abzugeben. Der Haltestrom liegt typischerweise im Bereich zwischen 0,5 und 1,5A (Hold-Phase).

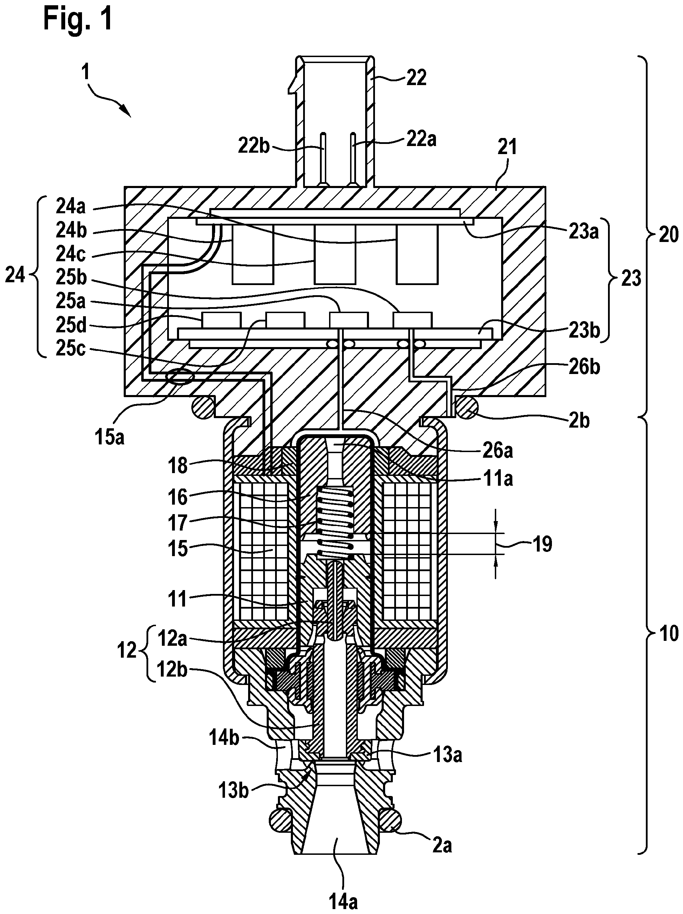

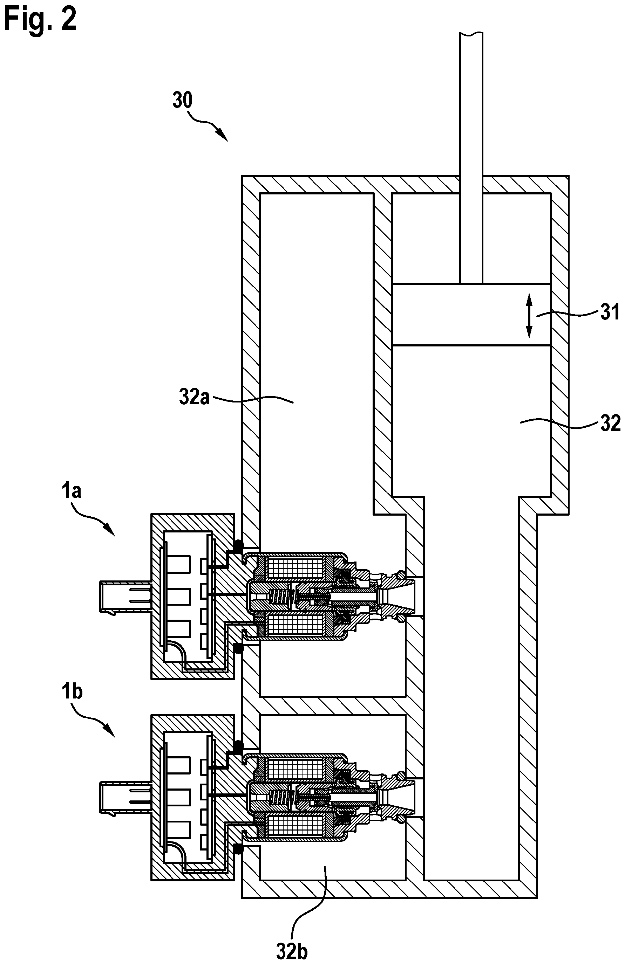

In einer bevorzugten, alternativen Ausgestaltung ist das Magnetventil als bistabiles Magnetventil ausgebildet, das heißt das Magnetventil (bzw. der Magnetanker und/oder das Stellglied) verbleibt auch unbestromt bzw. ohne Haltestrom in der jeweils zuletzt angefahrenen Schaltstellung, die in der Regel zugleich eine Endlage des Magnetventils ist. Ein derartiges Schaltventil ist beispielsweise aus der DE 10 2011 078 104 A1 bekannt und der dort offenbarte Aufbau und Betrieb des bistabilen Magnetventils wird in den Offenbarungsgehalt der vorliegenden Schrift aufgenommen, insbesondere Absätze [0009]ff. sowie Figuren 1 und 2. In einem derartigen bistabilen Magnetventil ist im Magnet- bzw. Eisenkreis des Magnetventils bzw. des Aktuatorabschnitts bevorzugt genau oder wenigstens ein Permanentmagnet angeordnet, der einen Magnetfluss in dem Magnetkreis erzeugt, der den Magnetanker nach dem Anfahren der Arbeitsposition auch ohne Bestromung in der Schaltstellung mit kleinem Luftspalt hält. In einem bistabilen Magnetventil ist somit die Unterscheidung zwischen NO- und NC-Ventil aufgehoben, da beide Schaltstellungen bzw. Endlagen stromlos stabil gehalten werden können.

Dabei kann der Permanentmagnet im Magnetanker oder im feststehenden Magnetkern angeordnet sein. Der Permanentmagnet ist im einfachsten Fall ein einstückiger, ringförmiger, beispielsweise axial magnetisierter Permanentmagnet. Alternativ können als Permanentmagnet auch mehrere beispielsweise ringsegmentförmige Permanentmagnetsegmente vorgesehen sein, wodurch die Montage des Magnetventils vereinfacht wird. Diese Permanentmagnetsegmente sind beispielsweise direkt aneinander liegend und ringförmig angeordnet, so dass sich ein mehrstückiger Permanentmagnetring ergibt. Alternativ können die Permanentmagnetsegmente auch voneinander beabstandet sein.

Ein derartiges bistabiles Magnetventil weist entsprechend eine erste Schaltstellung mit einem großen bzw. größeren Luftspalt auf, die durch das mechanische Federelement gehalten wird, und eine zweite Schaltstellung mit einem kleinen bzw. kleineren Luftspalt, die durch den Magnetfluss des Permanentmagneten gehalten wird.

Die Elektronik der Magnetventileinheit ist bei dieser bistabilen Magnetventilvariante bevorzugt dazu eingerichtet, (nur) eine sogenannte Push-Bestromung zum Wechseln der Schaltstellungen zu liefern, das heißt beispielsweise einen wie oben beschriebenen Schaltstrom. Die Schaltströme zum Anfahren der beiden verschiedenen Schaltstellungen weisen in der Regel unterschiedliche Polaritäten auf. Im einfachsten Fall ist die Stärke und die Dauer des Schaltstroms für das Anfahren der ersten Schaltstellung und für das Anfahren der zweiten Schaltstellung identisch und lediglich die Polarität verschieden. Im Allgemeinen sind die Schaltströme für das Anfahren der beiden Schaltstellungen jedoch nicht nur hinsichtlich der Polarität verschieden, sondern auch hinsichtlich (absoluter) Stromstärke und/oder Dauer, da für das Anfahren der verschiedenen Schaltstellungen in der Regel unterschiedliche Energiemengen benötigt werden.

Die Verwendung eines bistabilen Magnetventils hat (im Vergleich zu einem monostabilen Ventil) den Vorteil, dass die Elektronik keinen Haltestrom, sondern nur noch den nur kurzzeitig anliegenden Schaltstrom erzeugen muss. Die Elektronik kann entsprechend weniger aufwendig, das heißt mit weniger aufwendigen Bauteilen vorgesehen werden, da nur eine kurzzeitige energetische Belastung auftritt. Zudem tritt ein geringer Energieverbrauch und nur eine entsprechend reduzierte Wärmeentwicklung auf, was einen platzsparenden Aufbau der Elektronik bzw. der Elektronikeinheit gestattet, die bauliche Integration der Elektronik in der Magnetventileinheit begünstigt und somit Bauraum spart. Der Schaltstrom liegt - wie bereits erwähnt - typischerweise im Bereich von 1,5A bis 10A, bevorzugt zwischen 1,5A und 3A, und beträgt beispielsweise 1,5A, 2A, 3A, 4A, 5A, 7A oder 10A, wobei jeder der genannten Werte auch eine Ober- oder Untergrenze des genannten Wertebereichs darstellen kann. Der Schaltstrom wird typischerweise über einen Zeitraum zwischen 100ms und 1000ms abgegeben, wobei die Elektronik vorliegend weiterhin dazu eingerichtet ist, jeweils Schaltströme mit unterschiedlichen Polaritäten und bevorzugt auch unterschiedlichen (absoluten) Stromstärken und/oder Dauern zu erzeugen bzw. abzugeben.

Die Verwendung eines bistabilen Magnetventils in der erfindungsgemäßen Magnetventileinheit bietet Vorteile und neue Anwendungsaspekte nicht nur im Regelbetrieb, sondern auch bei Vorliegen bzw. Eintritt eines Failsafe-Zustands bzw. Failsafe-Falls (beispielsweise Wegfall der Versorgungsspannung, äußere Betriebsstörung, Kabelbruch, Systemausfall, Bordnetzausfall, etc.). Dies gilt insbesondere bei Einsatz der erfindungsgemäßen Magnetventileinheit in sicherheitskritischen Anwendungen wie in einer Luftfeder oder einem Stoßdämpfer eines Fahrzeugs, wo ein geschlossenes Magnetventil eine harte Federkennung der Luftfeder bewirkt und eine offenes Magnetventil eine weiche Federkennung.

Bislang werden dort nur 2/2 On/Off NO-Schaltventile als absperrbare Verbindung zwischen den Kammern bzw. Luftvolumina einer Luftfeder verwendet. Diese Verwendung von NO-Ventilen resultiert aus Betrachtungen zum Energieverbrauch der Magnetventile im repräsentativen Fahreinsatz. Allerdings befindet sich die Luftfeder im (unbestromten) Failsafe-Zustand dann im weichen und damit eher fahrkritischen Zustand. Im Hinblick auf die Fahrsicherheit wäre jedoch wünschenswert, dass die Luftfeder im Failsafe-Zustand die harte Federkennung einnimmt, sprich das Magnetventil geschlossen ist. Diese Forderung ist mit den derzeit verwendeten NO-Ventilen nicht erfüllbar. Um diesen Fall abzudecken, wäre die Verwendung eines NC-Ventils nötig, was bestenfalls für Fahrzeuge denkbar ist, in welchen die harte Federkennung auch im Regelbetrieb verwendet wird.

Die Verwendung eines bistabilen Magnetventils in der erfindungsgemäßen Magnetventileinheit schafft nun die Voraussetzung, all die vorstehend genannten Forderungen hinsichtlich des Failsafe-Zustands erfüllen zu können.

Wie erwähnt verbleibt ein bistabiles Magnetventil ohne aktiven Schaltimpuls bzw. Schalt- oder Haltestrom in der jeweils zuletzt angefahrenen Schaltstellung. Im Failsafe-Fall, das heißt etwa bei Ausfall der Versorgungsspannung, soll das Magnetventil allerdings eine vorgegebene Schaltstellung (der beiden bzw. verschiedenen Schaltstellungen des Magnetventils) einnehmen, die im Folgenden als Failsafestellung bzw Failsafe-Schaltstellung bezeichnet wird. Dabei können prinzipiell sowohl die erste oder auch die zweite Schaltstellung die Failsafestellung bilden bzw. als Failsafestellung vorgesehen sein.

Um die vorgesehene Failsafestellung auch im Failsafe-Fall bzw. bei oder nach Eintritt des Failsafe-Zustands, insbesondere bei Wegfall der Versorgungsspannung, einnehmen zu können, weist die Elektronik bevorzugt einen Energiespeicher auf, der eingerichtet ist, zumindest eine Failsafeenergie bzw. Failsafe-Energiemenge zu speichern und/oder der Elektronik bereitzustellen. Die Failsafeenergie ist die Energiemenge, die notwendig ist, damit die Elektronik eine Failsafebestromung, das heißt den für das Anfahren der Failsafestellung (aus der anderen Schaltstellung) notwendigen Schaltstrom, wenigstens oder genau einmal erzeugen kann. Entsprechend ist die Elektronik eingerichtet anhand der in dem Energiespeicher gespeicherten elektrischen Energie bzw. Failsafeenergie eine Failsafebestromung zu erzeugen und an das Magnetventil bzw. die Magnetspule abzugeben. Der Energiespeicher ist bevorzugt auch dazu eingerichtet die notwendige Energie zum Betrieb der Elektronik bzw. einer Steuerlogik bereitzustellen, damit beispielsweise zumindest ein Failsafeablauf (siehe weiter unten) durchgeführt werden kann. Damit kann die Magnetventileinheit autonom agieren und das Anfahren und Halten der Failsafestellung im Failsafe-Fall auch bei einem Ausfall der Versorgungsspannung sicherstellen. Die Failsafebestromung ist im einfachsten Fall identisch zu dem Schaltstrom zum Anfahren der als Failsafestellung vorgesehenen Schaltstellung.

Der Energiespeicher kann prinzipiell eine (wiederaufladbare) Batterie bzw. allgemein ein chemischer Akkumulator sein. Bevorzugt ist der Energiespeicher jedoch ein Kondensator oder allgemein eine Anordnung (insbesondere eine Parallelschaltung) mehrerer Kondensatoren. Eine (Gesamt-)Speicherkapazität des Kondensators (bzw. der Kondensatoranordnung) liegt bevorzugt im Bereich zwischen 1000 und 5000 µF, bevorzugt zwischen 3000 - 4000µF, und beträgt beispielsweise 1000, 2000, 3000, 4000 oder 5000µF, wobei jeder der genannten Werte auch eine Ober- oder Untergrenze des genannten Wertebereichs darstellen kann. Dabei liegt an dem Kondensator bevorzugt die Versorgungsspannung, das heißt 12V, 24V oder 48V (direkt) an.

Um die Speichergröße des Kondensators und damit die Bauteilkosten zu minimieren, ist bevorzugt die erste Schaltstellung des Magnetventils (mit großen bzw. größerem Luftspalt), die durch das mechanische Federelement gehalten wird, als die Failsafestellung vorgesehen, da diese in der Regel mit einem geringeren Schaltstrom bzw. einem geringeren Energieaufwand als die zweite Schaltstellung angefahren werden kann.

In einer bevorzugten Ausgestaltung ist die Elektronik eingerichtet, einen Failsafeablauf bzw. - schrittablauf durchzuführen (das heißt in der Elektronik ist ein Failsafeablauf implementiert) und diesen im Failsafe-Fall bzw. bei oder nach Eintritt des Failsafe-Zustands zu starten oder anzustoßen.

In einer ersten bevorzugten Variante ist die Elektronik so eingerichtet, dass der Failsafeablauf lediglich die (unbedingte) Abgabe der Failsafebestromung an die Magnetspule des Magnetventils umfasst bzw. daraus besteht. Dabei wird die Failsafebestromung in jedem Fall und unbedingt an das Magnetventil abgegeben, das heißt der Failsafeablauf umfasst bevorzugt nur einen einzigen Schritt. Dadurch wird (je nach vorheriger Schaltstellung) entweder die Failsafestellung angefahren (wenn sich das Magnetventil nicht in der Failsafestellung befunden hatte) oder lediglich beibehalten (wenn sich das Magnetventil bereits in der Failsafestellung befunden hatte). In jedem Fall wird dadurch sichergestellt, dass das Magnetventil nach dem Ausführen des Failsafeablaufs die gewünschte Failsafestellung einnimmt.

In einer zweiten bevorzugten Variante umfasst die Elektronik eine Schaltstellungs-Erkennungseinrichtung und die Elektronik ist so eingerichtet, dass der Failsafeablauf (mit Hilfe der Schaltstellungs-Erkennungseinrichtung) zunächst die aktuelle Schaltstellung des Magnetventils, erkennt. Die Elektronik ist weiterhin so eingerichtet, dass der Failsafeablauf entweder (ohne weiteren Schritt) beendet bzw. abgebrochen wird, wenn erkannt wird, dass das Magnetventil sich bereits in der Failsafestellung befindet, so dass keine Abgabe der Failsafebestromung erfolgt, oder dass die Failsafebestromung abgegeben wird, wenn erkannt wird, dass sich das Magnetventil nicht in der Failsafestellung befindet. Die Elektronik ist somit so eingerichtet, dass nur eine bedingte Failsafebestromung in Abhhängigkeit der Schaltstellung bei Eintritt des Failsafe-Zustands erfolgt. Entsprechend wird der Schaltstrom bzw. die Failsafebestromung nur dann von der Elektronik erzeugt, wenn sich das Magnetventil bei Eintritt des Failsafe-Zustands (noch) nicht in der Failsafestellung befindet. Durch diese bedingte Abgabe der Failsafebestromung kann der Energieverbrauch und die Belastung der Elektronik der Magnetventileinheit reduziert werden.

Die Elektronik bzw. die Schaltstellungs-Erkennungseinrichtung ist in einer bevorzugten ersten Ausgestaltungsvariante dazu eingerichtet, die Schaltstellung des Magnetventils anhand eines zuletzt (vor Eintritt des Failsafe-Zustands) abgegebenen Schaltstroms zu erkennen, insbesondere anhand der Polarität des zuletzt abgegebenen Schaltstroms. In einer bevorzugten zweiten Ausgestaltungsvariante der Schaltstellungs-Erkennungseinrichtung ist die Elektronik bzw. die Schaltstellungs-Erkennungseinrichtung dazu eingerichtet, die Schaltstellung des Magnetventils anhand einer Bestimmung der Induktivität der Magnetspule des Magnetventils zu erkennen. Diese zweite Ausgestaltungsvariante nutzt die Tatsache, dass die Induktivität der Magnetspule in der ersten Schaltstellung bei großem Luftspalt bzw. offenem Magnetkreis verschieden ist von der Induktivität in der zweiten Schaltstellung bei kleinem Luftspalt bzw. bei geschlossenem Magnetkreis. Beide Varianten haben den Vorteil, dass zur Erkennung der Schaltstellung des Magnetventils kein Positionssensor notwendig ist, wodurch Bauteil- und Montageaufwand eingespart wird. Entsprechend weist das Magnetventil und die Magnetventileinheit bevorzugt keinen Positionssensor zur Erkennung der Schaltstellung des Magnetventils bzw. des Magnetankers auf.

Im einfachsten Fall ist die Elektronik eingerichtet, den Failsafeablauf anhand eines Failsafesignals eines übergeordneten Steuergeräts bzw. eines externen Ventilsteuergeräts zu starten oder anzustoßen, das heißt anhand eines externen Steuersignals, das dann in der Regel über den Steuer-Anschluss eingeht. Um jedoch auch Störungen am Steuer-Anschluss bzw. in der Steuerleitung erkennen zu können weist die Elektronik in einer bevorzugten Variante eine Failsafe-Erkennungseinrichtung (zur Eigendiagnose eines Failsafe-Falls) auf. Die Failsafe-Erkennungseinrichtung ist entsprechend dazu eingerichtet, einen Failsafe-Zustand, das heißt einen Failsafe-Fall bzw. den Eintritt oder das Vorliegen eines Failsafe-Zustands selbstständig zu erkennen und den Failsafeablauf im Failsafe-Fall anzustoßen. Die Failsafe-Erkennungseinrichtung erkennt als Failsafe-Zustand bevorzugt einen Ausfall oder eine Störung der Versorgungsspannung, einen Ausfall oder eine Störung am Steuer-Anschluss und/oder in der Steuerleitung oder dem Bus oder der Kommunikation mit einem übergeordneten Steuergerät, oder einen Kabelbruch, einen Systemausfall, einen Bordnetzausfall, etc.

In einer bevorzugten Ausgestaltung, ist die Elektronik eingerichtet, bei bzw. unmittelbar nach dem Einschalten der Versorgungsspannung die Failsafebestromung abzugeben. Dadurch wird das Magnetventil beim Start oder Neustart des Systems (beispielsweise beim Starten eines Fahrzeugs, im Sinne einer Initialisierung) in eine definierte Schaltstellung, nämlich die Failsafestellung, gebracht.

In einer weiteren bevorzugten Ausgestaltung, erkennt die Schaltstellungs-Erkennungseinrichtung (insbesondere über die Bestimmung der Induktivität) die Schaltstellung des Magnetventils in regelmäßigen (kurzen) Abständen von beispielsweise 1 bis 10 Sekunden, womit eine ständige und ggf. redundante Überwachung der aktuellen Schaltstellung des Magnetventil geschaffen wird.

In einer bevorzugten Ausgestaltung weist die Elektronik der Magnetventileinheit - alternativ oder zusätzlich zu der oben beschriebenen Antriebs-Elektronik - einen, zwei oder mehrere Sensoren auf, beispielsweise einen oder mehrere Drucksensor(en) und/oder einen Beschleunigungssensor und/oder einen Temperatursensor, oder besteht daraus. Im einfachsten Fall umfasst die Elektronik genau einen oder zwei Drucksensor(en) oder besteht daraus. Durch die erfindungsgemäße bauliche Integration der Elektronik innerhalb der bzw. in die Magnetventileinheit können damit die entsprechenden Messwerte (Druck, Beschleunigung, Temperatur, etc.) unmittelbar am Einsatzort der Magnetventileinheit erfasst und bereitgestellt werden. Die Sensoren liefern somit wertvolle Betriebsinformationen und sind dabei Teil der Elektronik und somit auch der vormontierten bzw. kompakten Baugruppe der Magnetventileinheit, so dass kein zusätzlicher Montageaufwand anfällt. Dabei werden die Messwerte der jeweiligen Sensoren mit Vorteil an dem (bereits vorhandenen) Steuer-Anschluss bereitgestellt, so dass auch an dieser Stelle kein zusätzlicher Montage- oder Verkabelungsaufwand entsteht und keine zusätzlichen Komponenten benötigt werden. Die Sensoren sind dabei mit Vorteil zugleich innerhalb des Magnetventileinheits-Gehäuses angeordnet, so dass die Sensoren zugleich geschützt sind.

In einer bevorzugten Ausgestaltung ist die Elektronik als Elektronikeinheit mit genau einer oder mehreren Leiterplatinen ausgebildet und der oder die Sensoren, das heißt sämtliche ggf. vorhandene Druck-, Beschleunigungs- und/oder Temperatursensoren, sind, gemeinsam mit den übrigen Komponenten der Elektronik, auf der oder den Leiterplatinen angeordnet.

Bevorzugt weist die Magnetventileinheit eine erste und/oder zweite Druckzuleitung auf, die den ersten bzw. zweiten Drucksensor jeweils mit den beiden Fluidanschlüsse des Magnetventils pneumatisch oder hydraulisch verbindet.

Der erste Fluidanschluss ist dabei ein axialer Fluidanschluss und das Magnetventil ist bevorzugt ein druckausgeglichenes Ventil, das heißt ein Aktuatorraum, umfassend den Magnetanker und Magnetkern, ist mit einem axialen Ventilraum bzw. dem axialen Fluidanschluss pneumatisch bzw. hydraulisch verbunden. Das Magnetventil weist beispielsweise einen durchgängig hohlen Stößel oder anderweitige Druckdurchlässe auf, mit denen der Druck vom axialen Fluidanschluss in den Aktuatorraum, und somit beispielsweise auf die "Rückseite" des Magnetankers und/oder des Magnetkerns, geleitet wird. Der Aktuatorraum verläuft somit mit Vorteil bis auf eine der Elektronikeinheit zugewandten Seite der Magnetspule des Magnetventils und/oder bis an oder in die Nähe der von den Fluidanschlüssen abgewandten Stirnseite des Magnetventils. Die erste Druckzuleitung führt dann bevorzugt von dem ersten Drucksensor zum Aktuatorraum.

Der zweite Fluidanschluss ist ein radialer Fluidanschluss. Zusätzlich oder alternativ führt bevorzugt die zweite Druckzuleitung von dem zweiten Drucksensor in einen Ventilraum des radialen Fluidanschlusses.

In einer bevorzugten Ausgestaltung weist die Magnetventileinheit einen ersten äußeren, elastomeren Dichtring auf, der auf einer Außenseite des Magnetventils zwischen erstem und zweitem bzw. zwischen axialem und radialem Fluidanschluss angeordnet ist, so dass die Magnetventileinheit mit Hilfe des ersten Dichtrings eine erste bzw. axiale (bzw. die über den axialen Fluidanschluss mit dem Magnetventil kommunizierende) Fluid- oder Luftkammer gegenüber einer zweiten bzw. radialen (bzw. die über den radialen Fluidanschluss mit dem Magnetventil kommunizierende) Fluid- oder Luftkammer abdichten kann bzw. bei bestimmungsgemäßer Verwendung abdichtet.

Alternativ oder zusätzlich weist die Magnetventileinheit einen zweiten äußeren elastomeren Dichtring auf, der beispielsweise auf der dem ersten Dichtring gegenüberliegenden Seite des radialen Fluidanschlusses angeordnet ist, so dass die Magnetventileinheit mit Hilfe des zweiten Dichtrings die zweite, radiale Fluid- oder Luftkammer beispielsweise gegenüber einer Außenseite bzw. der Atmosphäre abdichten kann. Bevorzugt ist der zweite Dichtring (umlaufend) auf einer Außenseite des Gehäuses der Elektronikeinheit und/oder beabstandet von dem Magnetventilentil angeordnet.

Bevorzugt führt dabei die zweite Druckzuleitung von dem zweiten Drucksensor der Elektronik auf die Außenseite des Magnetventileinheits-Gehäuses, an eine Stelle, die axial zwischen dem ersten und dem zweiten Dichtring liegt, bzw. in den Bereich der zweiten bzw. radialen Fluid- oder Luftkammer. Besonders bevorzugt führt die zweite Druckzuleitung an eine Stelle auf der Außenseite des Gehäuses der Elektronikeinheit die (axial) zwischen zweitem Dichtring und dem Magnetventil liegt.

Die Erfindung betrifft weiterhin eine Luftfeder, insbesondere eine Mehrkammer-Luftfeder mit einer wie oben beschriebenen Magnetventileinheit, umfassend ein erstes und ein zweites Luftvolumen bzw. eine erste und eine zweite Luftkammer, die pneumatisch über die Magnetventileinheit absperrbar verbunden sind.

Dabei sind die Luftkammern bevorzugt zueinander benachbart und/oder zumindest eine Luftkammer an Außenseite der Luftfeder angeordnet und weisen jeweils Öffnungen zueinander und zur Außenseite bzw. Atmosphäre hin auf, die durch die Magnetventileinheit bzw. das Magnetventileinheits-Gehäuse (und die darauf ggf. angeordneten Dichtringe) dichtend geschlossen werden. Die Magnetventileinheit kann somit in die Luftfeder bzw. in die vorbestimmten Öffnungen der Luftfeder eingesteckt werden, was die Montage eines Schaltventils bzw. der Magnetventileinheit der Luftfeder vereinfacht. Bevorzugt werden die Fluidanschlüsse des Magnetventils der Magnetventileinheit durch einfache Öffnungen gebildet, da eine Abdichtung beispielsweise bereits durch das Magnetventileinheits-Gehäuse und die Dichtringe auf dessen Außenseite geschieht.

Dabei bildet beispielsweise das erste Luftvolumen das sogenannte Basisvolumen der Luftfeder, in welchem ein Federkolben verfährt. Dieses Basisvolumen ist durch das zweite Luftvolumen (Zusatzvolumen) über die Magnetventileinheit erweiterbar, wodurch ein gemeinsames Luftvolumen entsteht, das zu weicheren Federeigenschaften als das Basisvolumen alleine führt. Dabei bilden in der Regel die harten Federeigenschaften des Basisvolumens alleine die Failsafe-Einstellung, weswegen die Failsafestellung der Magnetventileinheit bei dieser Anwendung die Schließstellung ist.

In der Luftfeder kann genau ein Zusatzvolumen (Zwei-Kammer-Luftfeder) oder es können auch zwei Zusatzvolumina (Drei-Kammer-Luftfeder) oder auch mehr Zusatzvolumina vorgesehen sein, die dann bevorzugt selektiv zuschaltbar sind und/oder verschieden große sind.

Die Erfindung betrifft weiterhin ein Luftfedersystem eines Fahrzeugs bzw. Kraftfahrzeugs, umfassend ein oder mehrere wie oben beschriebene Magnetventileinheiten oder ein oder mehrere wie oben beschriebene Luftfedern.

### KURZE BESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen, dargestellten Ausführungsbeispiele beschränkt.
- Figur 1: zeigt eine Schnittansicht einer Magnetventileinheit, und
- Figur 2: zeigt eine Schnittansicht einer Luftfeder.

### DETAILLIERTE BESCHREIBUNG

Figur 1 zeigt eine Schnittansicht durch ein Ausführungsbeispiel der erfindungsgemäßen Magnetventileinheit 1. Diese umfasst ein im Prinzip bereits bekanntes Magnetventil 10, das als bistabiles Sitzventil aufgebaut ist, wie es beispielsweise in der DE 10 2011 078 204 A1 beschrieben ist. Das Magnetventil 10 umfasst einen linear beweglichen Magnetanker 11, der über eine hohle Stößelstange 12a und einen Hohlstößel 12b (im Folgenden als Stößel 12 bezeichnet) mit einem elastomeren Dichtelement 13a fest verbunden ist. In der in Figur 1 gezeigten Schaltstellung bzw. Endlage greift das Dichtelement 13a an den Dichtsitz 13b dichtend ein (Schließstellung) und sperrt somit den axialen Fluidanschluss 14a von dem radialen Fluidanschluss 14b ab. Das Magnetventil 10 umfasst weiterhin eine Magnetspule 15, bei deren Bestromung der Magnetanker 11 in Richtung des feststehenden Magnetkerns 16 gedrängt wird, bei ausreichender Bestromung die Rückstellkraft des Federelements 17 überwindet und aus der in Figur 1 dargestellten ersten Schaltstellung mit großem Luftspalt 19 (Schließstellung) in eine nicht dargestellte zweite Schaltstellung mit kleinem Luftspalt 19 (Offenstellung) verfährt.

Der in dem Magnetventil 10 unter anderem durch Magnetanker 11 und Magnetkern 16 sowie weitere weich- oder ferromagnetische Elemente (Übergangscheibe, äußerer Magnetschluss, etc.) um die Spule 15 herum gebildete Magnet- bzw. Eisenkreis umfasst weiterhin einen Permanentmagneten 18, der vorliegend als axial magnetisierter Ring ausgebildet ist und aus einer Vielzahl von aneinanderstoßenden Ringsegmenten besteht. Dadurch wird auch ohne Bestromung in der zweiten Schaltstellung eine ausreichende Magnetkraft zwischen dem Magnetanker 11 und dem Magnetkern 16 erzeugt, so dass das Magnetventil in der (nicht dargestellten) Offenstellung verbleibt. Erst durch anlegen einer den Magnetfluss des Permanentmagneten 18 schwächenden Bestromung wird auch die anziehende Magnetkraft zwischen dem Magnetanker 11 und dem Magnetkern 16 geschwächt, so dass der Magnetanker 11 in die in Figur 1 dargestellte Schließstellung verfährt. Im einem nicht dargestellten Ausführungsbeispiel ist das Magnetventil 10 so aufgebaut, dass die Schließstellung des Ventils bei kleinem Luftspalt 19 eingenommen wird.

Die Magnetventileinheit 1 umfasst neben dem Magnetventil 10 auch eine Elektronikeinheit 20, die auf einer der Magnetspule 15 benachbarten axialen Stirnseite des Magnetventils 10 angeordnet und fest mit diesem verbunden ist. Die Elektronikeinheit 20 umfasst ein geschlossenes Gehäuse 21 sowie einen Versorgungsspannungs-Anschluss 22a und einen Steuer- bzw. Bus-Anschluss 22b. Diese sind in dem dargestellten Ausführungsbeispiel als ein gemeinsamer Elektroanschluss 22 realisiert. Innerhalb des geschlossenen Gehäuses 21 sind zwei Leiterplatinen 23a, 23b angeordnet, die in einem nicht dargestellten Ausführungsbeispiel jedoch auch als eine einzige Leiterplatine 23 realisiert werden können und im Folgenden daher als Leiterplatine 23 bezeichnet werden. Auf den Leiterplatinen 23a, 23b bzw. der Leiterplatine 23 befinden sich die verschiedenen elektrischen und elektronischen Bauelemente der Elektronik 24, die somit in der Elektronikeinheit 20 bzw. der Magnetventileinheit 1 integriert ist. Die integrierte Elektronik 24 umfasst dabei eine Steuerlogik 24a, eine Leistungselektronik 24b, einen Energiespeicher 24c, sowie einen ersten und zweiten Drucksensor 25a, 25b, einen Beschleunigungssensor 25c und einen Temperatursensor 25d. Dabei verlaufen zur Bestromung der Magnetspule 15 zwei einadrige Zuleitungen 15a zwischen der Leiterplatine 23 bzw. der Leistungselektronik 24b und der Magnetspule 15. Die Zuleitungen 15a bilden zugleich die einzigen elektrischen Zuleitungen des Magnetventils 10.

Weiterhin umfasst die Elektronikeinheit 20 bzw. gegebenenfalls auch das Magnetventil 10 Druckzuleitungen 26a, 26b, welche jeweils den ersten und zweiten Drucksensor 25a, 25b an den jeweils zu messenden Druck pneumatisch anbinden. Dabei ist der erste Drucksensor 25a dazu vorgesehen den Druck am axialen Fluidanschluss 14a zu erfassen. Entsprechend verläuft die erste Druckzuleitung 26a in den Aktuatorraum 11a, in welchem sich Magnetanker 11 und Magnetkern 16 befinden und der mit dem axialen Fluidanschluss 14a pneumatisch verbunden ist, da der Stößel 12 durchgehend hohl ist und das Magnetventil 10 ein druckausgeglichenes Ventil ist. Der zweite Drucksensor 25b ist dann dazu vorgesehen, den Druck an dem radialen Fluidanschluss 14b zu erfassen. In dem dargestellten Ausführungsbeispiel herrscht dieser Druck jedoch nicht nur an dem radialen Fluidanschluss 14b selbst, sondern auch an einem Teil der Außenseite des Gehäuses 21. Entsprechend verläuft die zweite Druckzuleitung 26b von dem zweiten Drucksensor 26b zu einer Stelle auf der Außenseite des Gehäuses 21 der Elektronikeinheit 20, die axial zwischen dem auf dem Gehäuse 21 der Elektronikeinheit 20 umlaufenden Dichtring 2b und dem Magnetventil 10 liegt.

In Figur 2 ist eine Luftfeder 30 bzw. ein Luftfederbein dargestellt mit einem Federkolben 31, der sich in einem zylinderförmigen Abschnitt des Basisvolumens 32 linear bewegt. Das Basisvolumen 32 ist über eine erste Magnetventileinheit 1a mit einem ersten Zusatzvolumen 32a absperrbar verbunden. Die Öffnung zwischen der Luftkammer des Basisvolumens 32 und der Luftkammer des ersten Zusatzvolumens 31a wird mit Hilfe der Magnetventileinrichtung 1a und deren umlaufendem Dichtring 2a dichtend verschlossen. Weiterhin wird die Luftkammer des ersten Zusatzvolumens 32a durch die Magnetventileinrichtung 1a und den umlaufenden Dichtring 2b gegenüber der Außenseite bzw. der Atmosphäre abgedichtet.

Die Luftfeder 30 umfasst weiterhin ein zweites Zusatzvolumen 32b, dessen Luftkammer gegenüber dem Basisvolumen 32 mit Hilfe der zweiten Magnetventileinrichtung 1b wiederum dichtend und absperrbar verbunden ist. Ebenso ist die Luftkammer des zweiten Zusatzvolumens 32b mit Hilfe der zweiten Magnetventileinrichtung 1b auch gegenüber der Außenseite abgedichtet. Dabei ist das zuschaltbare zweite Zusatzvolumen 32b kleiner als das zuschaltbare erste Zusatzvolumen 32a und beide Zusatzvolumen 32a, 32b können selektiv und wahlweise, unabhängig voneinander dem Basisvolumen 32 zugeschaltet werden.

### BEZUGSZEICHENLISTE

- 1, 1a, 1b: Magnetventileinheit
- 2a, 2b: Dichtring
- 10: Magnetventil
- 11: Magnetanker
- 11a: Aktuatorraum
- 12: Stößel
- 12a: Stößelstange
- 12b: Hohlstößel
- 13a: Dichtelement
- 13b: Dichtsitz
- 14a: axialer Fluidanschluss
- 14b: radialer Fluidanschluss
- 15: Magnetspule
- 15a: elektrische Zuleitungen
- 16: Magnetkern
- 17: Rückstellfeder
- 18: Permanentmagnet
- 19: Luftspalt, Arbeitsluftspalt

- 20: Elektronikeinheit
- 21: Gehäuse
- 22: Elektro-Anschluss
- 22a: Versorgungsspannungs-Anschluss
- 22b: Steuer-Anschluss, Bus-Anschluss
- 23, 23a, 23b: Leiterplatine
- 24: Elektronik
- 24a: Steuerlogik, Schaltstellungs-, Failsafe-Erkennungseinrichtung
- 24b: Leistungselektronik
- 24c: Energiespeicher, Kondensator
- 25a,b: erster, zweiter Drucksensor
- 25c: Beschleunigungssensor
- 25d: Temperatursensor
- 26a,b: erste, zweite Druckzuleitung

- 30: Luftfeder
- 31: Federkolben
- 32: Basisvolumen
- 32a, 32b: erstes, zweites Zusatzvolumen

## Patentansprüche

1. Magnetventileinheit (1) umfassend ein Magnetventil (10) und eine Elektronik (24), die bevorzugt zum Antrieb des Magnetventils eingerichtet ist und/oder einen Sensor, besonders bevorzugt einen Drucksensor umfasst.

2. Magnetventileinheit (1) nach Anspruch 1 umfassend ein Gehäuse, das bevorzugt ein geschlossenes Gehäuse ist, wobei die Magnetventileinheit und/oder das Gehäuse zwei Fluidanschlüsse (14a, 14b) und/oder zwei elektrische Anschlüsse aufweist, bevorzugt einen Versorgungsspannungs-Anschluss (22a) und einen Steuer-Anschluss (22b).

3. Magnetventileinheit (1) nach einem der vorhergehenden Ansprüche, **dadurch gekennzeichnet**
- **dass** elektrische Zuleitungen des Magnetventils (10) zur Elektronik (24) führen, und/oder
- **dass** das Magnetventil eine Magnetspule (15) aufweist und die Elektronik eingerichtet ist, einen Spulenstrom abzugeben und/oder zu erzeugen, und/oder
- **dass** die Elektronik mit der Magnetspule des Magnetventils elektrisch unmittelbar verbunden ist, und/oder
- **dass** die Elektronik eine Steuerlogik (24a) und/oder eine Leistungselektronik (24b) aufweist, und/oder
- **dass** die Elektronik dazu eingerichtet ist die Versorgungsspannung an die Magnetspule des Magnetventils anzulegen, und/oder
- **dass** genau zwei einadrige elektrische Zuleitungen (15a) zwischen Elektronik und Magnetventil bzw. der Magnetspule des Magnetventils verlaufen.

4. Magnetventileinheit (1) nach einem der vorhergehenden Ansprüche, **dadurch gekennzeichnet, dass** die Elektronik als Elektronikeinheit (20) ausgebildet ist,
- die bevorzugt eine Leiterplatine (23) aufweist, auf der die Komponenten der Elektronik (24), insbesondere integrierte Elektronikbauelemente, angeordnet sind, und/oder
- die bevorzugt ein Gehäuse (21) aufweist und bevorzugt gemeinsam mit dem Magnetventil (10) das Gehäuse der Magnetventileinheit bildet, und/oder
- die bevorzugt mit dem Magnetventil fest verbunden ist, und/oder
- die bevorzugt auf einer Längsachse der Magnetspule und/oder an einer axialen Stirnseite des Magnetventils, insbesondere eines Aktuators oder der Magnetspule (15), angeordnet ist.

5. Magnetventileinheit (1) nach einem der vorhergehenden Ansprüche, **dadurch gekennzeichnet**
- **dass** das Magnetventil (10) ein NO- oder ein NC-Ventil ist, oder
- **dass** das Magnetventil ein bistabiles Magnetventil ist, welches bevorzugt einen Permanentmagneten (18) in einem Magnetkreis des Magnetventils aufweist, und/oder
- **dass** das Magnetventil ein Schaltventil, ein Sitzventil und/oder ein 2/2-Ventil ist, und/oder
- **dass** das Magnetventil eine erste Schaltstellung mit großem Luftspalt (19) und eine zweite Schaltstellung mit kleinem Luftspalt aufweist,
wobei eine Failsafestellung bevorzugt durch die erste Schaltstellung gebildet wird, die besonders bevorzugt eine Schließstellung des Magnetventils ist.

6. Magnetventileinheit (1) nach einem der vorhergehenden Ansprüche, **dadurch gekennzeichnet**
- **dass** die Elektronik einen Energiespeicher (24c) umfasst, der eingerichtet ist eine Failsafeenergie zu speichern und/oder der Elektronik (24) bereitzustellen, und/oder
- **dass** die Elektronik eingerichtet ist, anhand der Failsafeenergie eine Failsafebestromung zu erzeugen und an das Magnetventil (10) abzugeben, und/oder
- **dass** der Energiespeicher durch einen Kondensator gebildet wird, der bevorzugt eine Kapazität zwischen 1000 und 5000 µF aufweist.

7. Magnetventileinheit (1) nach Anspruch 6, **dadurch gekennzeichnet, dass** die Elektronik (24) eingerichtet ist, im Failsafe-Fall einen Failsafeablauf zu starten oder anzustoßen,
- entweder umfassend oder bestehend aus
- einer Abgabe der Failsafebestromung,
- oder umfassend oder bestehend aus
- einem Erkennen der Schaltstellung des Magnetventils (10), bevorzugt mit Hilfe einer Schaltstellungs-Erkennungseinrichtung (24a),
- einem Beenden des Failsafeablaufs, wenn die erkannte Schaltstellung die Failsafestellung ist, und/oder
- einer Abgabe der Failsafebestromung, wenn die erkannte Schaltstellung von der Failsafestellung verschieden ist,
wobei die Schaltstellungs-Erkennungseinrichtung eingerichtet ist, die Schaltstellung des Magnetventils anhand eines zuletzt abgegebenen Schaltstroms und/oder anhand einer Bestimmung einer Induktivität der Magnetspule (15) zu erkennen.

8. Magnetventileinheit (1) nach Anspruch 7, **dadurch gekennzeichnet**
- **dass** die Elektronik (24) eingerichtet ist, den Failsafeablauf anhand eines Failsafesignals eines übergeordneten Steuergeräts anzustoßen, und/oder
- **dass** die Elektronik eine Failsafe-Erkennungseinrichtung (24a) aufweist, die dazu eingerichtet ist, einen Failsafe-Zustand zu erkennen und den Failsafeablauf anzustoßen,
wobei als Failsafe-Zustand bevorzugt ein Ausfall oder eine Störung der Versorgungsspannung und/oder ein Ausfall oder eine Störung am Steuer-Anschluss (22b) erkannt wird.

9. Magnetventileinheit (1) nach Anspruch 6, 7, oder 8, **dadurch gekennzeichnet**
- **dass** die Elektronik (24) beim Einschalten der Versorgungsspannung die Failsafebestromung abgibt und/oder
- **dass** die Schaltstellungs-Erkennungseinrichtung (24a) die Schaltstellung in regelmäßigen Abständen erkennt.

10. Magnetventileinheit (1) nach einem der vorhergehenden Ansprüche, **dadurch gekennzeichnet, dass** die Elektronik (24) einen oder mehrere Sensoren, insbesondere einen oder zwei Drucksensoren (25a, 25b) und/oder einen Beschleunigungssensor (25c) und/oder einen Temperatursensor (25d) umfasst, wobei die Elektronik bevorzugt eingerichtet ist, Sensor-Messwerte am Steuer-Anschluss bereitzustellen.

11. Magnetventileinheit (1) nach Anspruch 10, wobei der Sensor oder die Sensoren (25a - 25d) auf der Leiterplatine (23) angeordnet ist/sind.

12. Magnetventileinheit (1) nach Anspruch 10 oder 11, **dadurch gekennzeichnet, dass** die Magnetventileinheit eine erste und/oder zweite Druckzuleitung (26a, 26b) aufweist, die einen ersten bzw. zweiten Drucksensor (25a, 25b) jeweils mit einem ersten bzw. zweiten Fluidanschluss (14a, 14b) der zwei Fluidanschlüsse pneumatisch oder hydraulisch verbindet,
wobei der erste Fluidanschluss ein axialer Fluidanschluss (14a) ist, das Magnetventil (10) bevorzugt ein druckausgeglichenes Ventil und bevorzugt die erste Druckzuleitung von dem ersten Drucksensor der Elektronik in den Aktuatorraum (11a) führt, und/oder wobei der zweite Fluidanschluss ein radialer Fluidanschluss (14b) ist und bevorzugt die zweite Druckzuleitung von dem zweiten Drucksensor der Elektronik in einen Ventilraum des radialen Fluidanschlusses führt.

13. Magnetventileinheit (1) nach Anspruch 10, 11 oder 12, **dadurch gekennzeichnet**
- **dass** die Magnetventileinheit einen ersten äußeren Dichtring (2a) aufweist, der zwischen axialem und radialem Fluidanschluss (14a, 14b) angeordnet ist, und/oder
- **dass** die Magnetventileinheit einen zweiten äußeren Dichtring (2b) aufweist, der auf der dem ersten Dichtring gegenüberliegenden Seite des radialen Fluidanschlusses (14b) angeordnet ist, wobei bevorzugt die zweite Druckzuleitung (26b) von dem zweiten Drucksensor (25b) der Elektronik (24) auf die Außenseite des Gehäuses (21) der Elektronikeinheit (20) führt.

14. Luftfeder (30), insbesondere Mehrkammer-Luftfeder mit einer Magnetventileinheit (1) nach einem der vorhergehenden Ansprüche, umfassend eine erste und eine zweite Luftkammer (32, 32a), die pneumatisch über die Magnetventileinheit absperrbar verbunden sind, wobei die Luftkammern bevorzugt benachbart angeordnet sind und/oder jeweils Öffnungen aufweisen, die durch die Magnetventileinheit dichtend geschlossen werden.

15. Luftfedersystem eines Fahrzeugs, umfassend eine oder mehrere Magnetventileinheiten (1) nach einem der Ansprüche 1 bis 13 oder eine oder mehrere Luftfedern (30) nach Anspruch 14.
